# EUROPEAN PATENT APPLICATION

(11) **EP 3 462 724 A1**
(43) Date of publication of application: **03.04.2019**
(21) Application number: 17306298.5
(22) Date of filing: 29.09.2017
(51) Int. Cl.: H04N 5/225, H04N 9/04

(54) **REDUCED OPTICAL CROSSTALK PLENOPTIC IMAGING DEVICE, CORRESPONDING METHOD, COMPUTER PROGRAM PRODUCT, COMPUTER-READABLE CARRIER MEDIUM AND APPARATUS**

(71) Applicant: Thomson Licensing, 92130 Issy-les-Moulineaux (FR)
(72) Inventor: DRAZIC, Valter, 35576 Cesson-Sévigné Cedex (FR); DAMGHANIAN, Mitra, 35576 Cesson-Sévigné Cedex (FR); SEIFI, Mozhdeh, 35576 Cesson-Sévigné Cedex (FR)
(74) Representative: Vidon Brevets & Stratégie

(57) **Abstract**

A plenoptic imaging device (2) comprising a micro-lens array (MLA) placed between a main lens (L) and an image sensor (IS) is provided. The plenoptic imaging device (2) further comprises a color filter element (CFE) arranged in an aperture stop plane of the main lens (L), said color filter element (CFE) comprising at least two different color filters.

## Description

### 1. Field of the disclosure

The present disclosure relates to the domain of plenoptic imaging devices and light-field acquisition methods. More precisely, the disclosure pertains to a specific optical assembly that allows limiting optical crosstalk phenomenon within an image sensor of a plenoptic imaging device.

### 2. Background

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

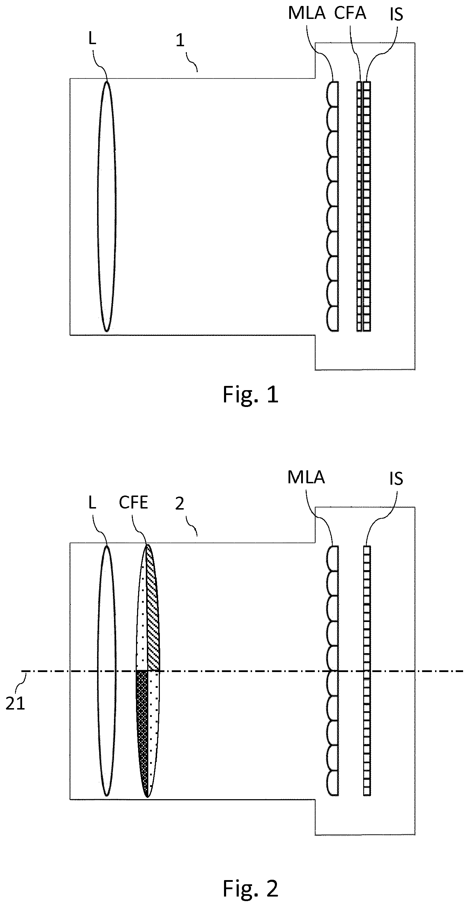

According to the background art, it is known to acquire different views of a same scene with a plenoptic imaging device, also called plenoptic camera. As schematically illustrated in relation with **figure 1****,** a plenoptic imaging device 1 according to prior art uses a micro-lens array (MLA) positioned in the image plane of a main lens (L) and in front of an image sensor (IS) on which one micro-image per micro-lens is projected (also called "sub-image" or "micro-lens image"). The micro-lens array (MLA) comprises a plurality of micro-lenses uniformly distributed, for example according to an orthogonal or a quincunx arrangement. The image sensor (IS) comprises a plurality of rows and columns of pixels, and each micro-lens image covers at least partially a predetermined number of rows and a predetermined number of columns of this image sensor (IS). In other words, the micro-lenses are arranged in such a way as to be optically each associated with a plurality of pixels of the image sensor. A plenoptic imaging device is designed so that each micro-lens image depicts a certain area of the captured scene and each pixel associated with that micro-lens image depicts this certain area from the point of view of a certain sub-aperture location on the main lens exit pupil. A color filter array (CFA) is arranged on the image sensor (IS), to enable full color image reconstruction. The color filter array (CFA) typically arranges red, green and blue (RGB) color filters on the image sensor, the RGB arrangement taking for example the form of a Bayer filter mosaic. Typically, one color filter (red, green or blue filter) is associated with one photosensor (i.e. one pixel) of the image sensor (IS), according to a predetermined pattern, which comprises 50 % green, 25 % red and 25 % blue in the example of a Bayer filter.

The number of pixels optically associated with one microlens corresponds to the number of views of the scene that may be acquired with the plenoptic imaging device. To obtain the different views, the raw plenoptic image (i.e. the data read-out from the image sensor) is demosaiced and de-multiplexed. The demosaicing enables to recover a full color raw image, i.e. to recover full color information (for example RGB information, RGB standing for "Red", "Green" and "Blue") for the pixels of the raw image while the raw image acquired with the plenoptic imaging device associates only one color component (R, G or B for example) with each pixel. The de-multiplexing enables to recover the different views of the scene, i.e. to group the pixels of the demosaiced raw image according to the view they belong to.

Because the plenoptic raw image needs to be de-multiplexed to obtain the different views of the scene, each rendered view has a spatial resolution that equals only a portion of the image sensor's spatial resolution. To obtain adequate spatial resolution at the view level (according to users current standard requirements), the image sensor of a plenoptic imaging device has thus to embed a large number of pixels, while still remaining as compact as possible. This makes plenoptic imaging device particularly sensible to optical crosstalk issues. Optical crosstalk designates the phenomenon where some of incident light rays which should have reached a given photosensor of an image sensor are unintentionally reflected and/or refracted, and finally reach another photosensor of the sensor. This phenomenon thus predominantly exists between adjacent pixels (or "neighbouring pixels") of the image sensor. Crosstalk issues become more pronounced as the density of pixels per surface unity increases and as the pixel size decreases. Indeed, the thickness of a small size pixel sensor (color filter included) cannot be scaled with the same rate as the pixel surface dimensions, to ensure acceptable sensitivity. For example, in order to ensure red sensitivity, the depth of a pixel sensor having a surface width of around 1 µm should be larger than 3 µm. The thickness of the color filter array arranged on the image sensor is one factor that contributes to generate crosstalk. For example, because of the color filter array thickness, some light entering a red color filter might cross-talk to an adjacent green color filter, especially at higher angle of incidence. As a result, the red spectrum is absorbed by the green color filter, reducing the overall optical efficiency of the plenoptic imaging device. Even at a lower angle of incidence, because of the color filter thickness, some light entering for example a red color filter may reach a photosensor that is located below another color filter, for example an adjacent green-color filter. Optical crosstalk thus undermines the light capture efficiency of the image sensor, and degrades the quality of images produced by the plenoptic imaging device by provoking undesirable results (such as blurring, reduction in contrast, reduction in sensitivity, color mixing, etc.).

It would hence be desirable to provide a technique that allows reducing crosstalk issues in a plenoptic imaging device.

### 3. Summary

According to an aspect of the present disclosure, a plenoptic imaging device comprising a micro-lens array placed between a main lens and an image sensor is disclosed. The proposed plenoptic imaging device further comprises a color filter element arranged in an aperture stop plane of the main lens, said color filter element comprising at least two different color filters.

In that way, there is no need to have a color filter array implemented directly on the surface of the image sensor anymore: the color filters are arranged directly in the aperture stop plane of the main lens, where their form factor is more advantageous to the light efficiency, i.e. at a place where their ratio thickness-to-area is significantly reduced. As a result, the crosstalk that occurs in the image sensor is reduced, compared to the one that occurs in image sensor of prior art plenoptic imaging device.

According to an embodiment, said color filter element can move between at least two predetermined positions in said aperture stop plane.

In that way, the color filter associated with a given pixel of the image sensor may be modified, depending on the position of the color filter element. Such a plenoptic imaging device thus allows acquiring intermediate plenoptic images that can be combined afterwards to obtain a true-color plenoptic image. As a result, the resolution of the sub-aperture views obtained with the proposed plenoptic imaging device is improved, since there is no need anymore to implement a demosaicing algorithm to reconstruct a full color image from incomplete color samples output from the image sensor. Indeed, the intermediate plenoptic images contain together complete color information for all the pixels that will be reorganized to generate the different views of the scene.

According to an embodiment, said color filter element takes the form of a color wheel centred on the optical axis of the plenoptic imaging device, and said plenoptic imaging device comprising means for rotating said color wheel about said optical axis.

In that way, the color filter element has a shape that is well adapted to conventional optical assembly. Moreover, using a color filter element taking the form of a color wheel offers an easy way to change the configuration of such a color filter element without requiring additional space within the optical assembly, by simply rotating the color wheel about its center.

According to an embodiment, said means for rotating the color wheel comprise an Eddy current ring motor or a piezoelectric ring motor.

In that way, different techniques may be implement to rotate the color wheel, depending on customer requirements. An Eddy current ring motor is easy and cheap to implement. A piezoelectric ring motor is fast and accurate.

According to an embodiment, said color wheel is divided into four equal parts, each part comprising one of said color filters.

In that way, the color filter element is designed with a four-part arrangement that allows implementing well-known color filter patterns for color reconstruction, such as RGGB (one red color filter, two green color filters, and one blue color filter), CYYM (one cyan color filter, two yellow color filters, and one magenta color filter) or CYGM (one cyan color filter, one yellow color filter, one green color filter and one magenta color filter) patterns for example.

According to an embodiment, the color filter element comprises a multiple of four color filters, respectively of color green, blue and red, in a proportion of two green color filters for one red color filter and one blue color filter.

In that way, the color filter element adopts a Bayer filter configuration, which is well known for its ability to mimic the higher sensitivity of the human eye towards green light.

According to an embodiment, said at least two different color filters are dichroic filters.

Compared to absorption filters, dichroic filters offer much better rejection ratios at wavelengths they are not supposed to transmit. In that way, the color gamut is greatly enhanced, and the overall colorimetry of the plenoptic imaging device is improved.

According to another embodiment, said at least two different color filters are electronically color-switchable filters.

In that way, the reliability of the plenoptic imaging device is improved, since the plenoptic imaging device does not need to embed a complex mechanism to modify the color filter element configuration.

According to another aspect of the present disclosure, a method for obtaining a raw plenoptic image is provided. This method is implemented by a plenoptic imaging device comprising a micro-lens array placed between a main lens and an image sensor, and a color filter element arranged in an aperture stop plane of the main lens, said color filter element comprising at least two different color filters. Said method comprises:
- acquiring, in different predetermined configurations of said color filter element, a set of intermediate plenoptic images;
- obtaining said raw plenoptic image from said set of intermediate plenoptic images.

In that way, the plenoptic imaging device according to the disclosure may be used to obtain true-color views of the scene. Demosaicing is no more required, and the spatial resolution of the views obtained from the plenoptic imaging device is thus improved.

According to an embodiment, the acquisition of a current intermediate plenoptic image of said set of intermediate plenoptic images comprises:
- exposing said image sensor to light coming through said plenoptic imaging device, in a current predetermined configuration of said color filter element;
- reading out data from said image sensor for acquiring said current intermediate plenoptic image, after said image sensor exposure.

According to an embodiment, said method further comprises modifying the configuration of said color filter element from said current predetermined configuration to a following predetermined configuration, after said image sensor exposure in said current predetermined configuration of the color filter element.

According to a particular characteristic, reading out data from the image sensor for acquiring said current intermediate plenoptic image and modifying the configuration of the color filter element from said current predetermined configuration to said following predetermined configuration are carried out simultaneously.

In that way, the time required to acquired the whole set of intermediate plenoptic images (and thus, possibly, to generate true-color views of the scene) is reduced.

According to an embodiment, modifying the configuration of the color filter element comprises:
- moving said color filter element in said aperture stop plane, and/or
- electronically switching colors of said at least two color filters of said color filter element.

The present disclosure also concerns an apparatus for obtaining a raw plenoptic image with a plenoptic imaging device according to the general principle previously presented. Such an apparatus comprises a module for acquiring, in different predetermined configurations of the color filter element, a set of intermediate plenoptic images, and a module for obtaining a raw plenoptic image from said set of intermediate plenoptic images.

The present disclosure also concerns a computer program product downloadable from a communication network and/or recorded on a medium readable by a computer and/or executable by a processor, comprising program code instructions for implementing the method as described above.

The present disclosure also concerns a non-transitory computer-readable medium comprising a computer program product recorded thereon and capable of being run by a processor, including program code instructions for implementing the method as described above.

Such a computer program may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read--only memory (EPROM or Flash memory); a portable compact disc read--only memory (CD-ROM); an optical storage device; a magnetic storage device; or any suitable combination of the foregoing.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### 4. Brief description of the drawings

Embodiments of the present disclosure can be better understood with reference to the following description and drawings, given by way of example and not limiting the scope of protection, and in which:
- **Figure 1****,** already described, presents an example of structure of a conventional plenoptic imaging device;
- **Figure 2** illustrates an example of structure of a plenoptic imaging device, according to an embodiment of the present disclosure;
- **Figure 3a** and **3b** show a color filter element taking the form of a color wheel, according to different embodiments of the present disclosure;
- **Figure 4** illustrates how a color filter element is imaged on the image sensor of a plenoptic imaging device, according to an embodiment of the present disclosure;
- **Figure 5a, 5b** and **5c** respectively show a stator (figure 5a), a rotor (figure 5b), and the final assembly (figure 5c) of an Eddy current ring motor that may be used to rotate a color wheel, according to an embodiment of the present disclosure;
- **Figure 6** is a flow chart for illustrating a method for obtaining a raw plenoptic image from intermediate plenoptic images acquired with a plenoptic imaging device, according to an embodiment of the present disclosure;
- **Figure 7** is a schematic block diagram illustrating an example of an apparatus for obtaining a raw plenoptic image from data acquired by an image sensor of a plenoptic imaging device, according to an embodiment of the present disclosure.

The components in the figures are not necessarily to scale, emphasis instead being placed upon illustrating the principles of the disclosure.

### 5. Detailed description

### 5.1 Plenoptic imaging device

The general principle of the present disclosure relies on a specific optical assembly of a plenoptic imaging device, that allows reducing optical crosstalk issues. As already presented in relation with prior art, one factor that contributes to increase optical crosstalk at an image sensor level is the thickness of the color filter array arranged on the image sensor, and more particularly the ratio pixel area to thickness. As it will be described more fully hereafter with reference to the accompanying figures, it is proposed in one aspect of the present disclosure to take advantage of the design specificities of a plenoptic imaging device to remove the color filter array from the surface of the image sensor, and to move the color filters at a place where their form factor is more advantageous to the light efficiency, i.e. at a place where their ratio thickness to area is significantly reduced. More particularly, according to the general principle of the present disclosure, it is proposed to place the color filters directly within an aperture stop plane of the main lens of the plenoptic imaging device. In the drawings, like or similar elements are designated with identical reference signs throughout the several views thereof.

An implementation of one embodiment of the disclosure is described in relation with **figure 2****.** Like prior art plenoptic imaging device, a plenoptic imaging device 2 according to the proposed technique comprises a micro-lens array (MLA) array placed between a main lens (L) and an image sensor (IS). For sake of simplicity, drawings illustrate only one lens to illustrate the main lens (L), but it is naturally understood that the main lens (L) can comprise a set of several lenses. The micro-lens array (MLA) delivers a set of micro-lens images on the image sensor (IS). In a classical way, the micro-lenses of the micro-lens array are designed so that each micro-lens images the main lens aperture on the image sensor (IS). Each micro-lens image of said set of micro-lens images covers at least partially a predetermined number of rows and a predetermined number of columns of the image sensor (IS).

The proposed plenoptic imaging device 2 differs from prior-art plenoptic imaging devices in that it comprises a color filter element (CFE) arranged in an aperture stop plane of the main lens (L), said color filter element (CFE) comprising at least two different color filters. It is understood with aperture stop plane of the main lens, the plane of the physical device(s) (i.e. lens(es) and/or a diaphragm) of the main lens that limits the cone of light passing through the main lens (L). The aperture stop plane of the main lens is thus a determined plane (depending from the design of the main lens) where a diaphragm, or more generally speaking an aperture stop, would be positioned to limit the cone of light passing through the main lens (L).

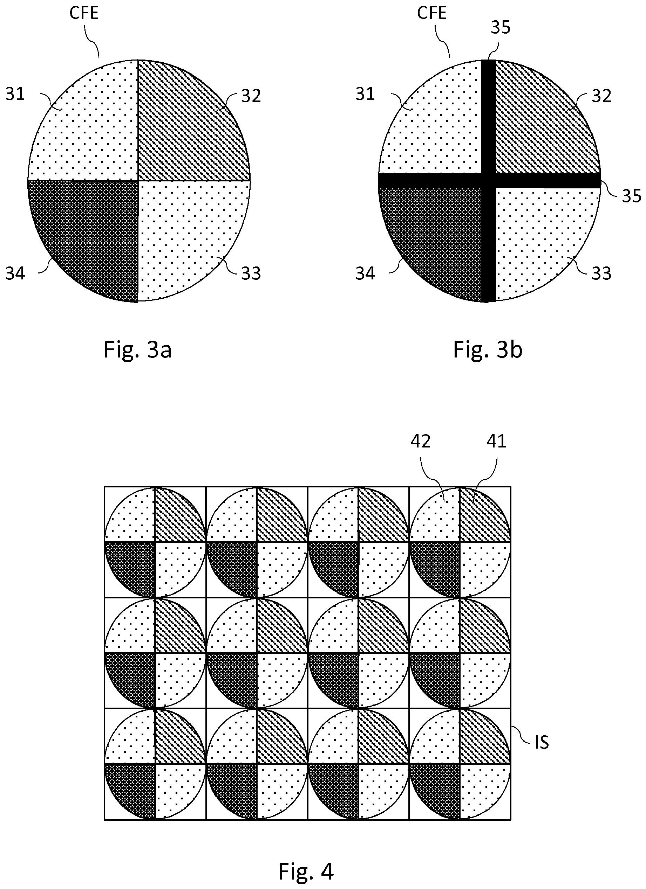

In the embodiment presented in relation with figure 2, the color filter element (CFE) takes the form of a color wheel centred on the optical axis 21 of the plenoptic imaging device 2 (the perspectives being not respected on figure 2). **Figure 3a** shows an example of such a color wheel, according to an embodiment of the proposed technique. The color wheel (CFE) is divided into four equal parts, each part comprising one color filter. The color wheel (CFE) thus embeds four color filters (31, 32, 33, 34). Such an arrangement allows reproducing color patterns that are widely used within color filters array, and that are known to allow efficient retrieving of full-color information thanks to appropriate demosaicing algorithms. For example, color filters 31 and 33 may be green color filters, color filter 32 may be a blue color filter, and color filter 34 may be a red color filter, thus implementing a Bayer filter pattern, which is well known for its ability to mimic the higher sensitivity of the human eye towards green light. Of course, other color arrangements may be used to implement other color pattern, such as CYYM pattern (one cyan color filter, two yellow color filters, and one magenta color filter) or CYGM pattern (one cyan color filter, one yellow color filter, one green color filter and one magenta color filter) for example. In other embodiment, one green color filter of a Bayer color pattern is replaced by a white color filter, to maximize light throughput. Other color patterns may also include one pure near infrared transmissive filter, for example. According to a particular characteristic, illustrated in relation with **figure 3b****,** the different color filters of the color wheel are separated by opaque frontiers 35, whose usefulness is discussed later in relation with figure 4.

Since the color wheel (CFE) is arranged in an aperture plane of the main lens, and because of the intrinsic design of a plenoptic imaging device, each micro-lens of the micro-lens array (MLA) images the color wheel on the image sensor (IS) of the plenoptic imaging device, as illustrated in relation with **figure 4****.** More particularly, figure 4 shows the color wheel of figure 3a imaged by each micro-lens on the image sensor (IS), in one embodiment of the proposed technique. For purposes of illustration, the image sensor (IS) of figure 4 is shown with a relative small number of pixels (forty-eight pixels), and a relative small number of micro-lens micro-images projected onto. Naturally, the number of pixels in the image sensor or the number of micro-lenses in the micro-lens array is not limited by the illustration of figure 4 but extends to any number of pixels and/or micro-lenses. Figure 4 also shows an example of a distribution of micro-lens images projected by an orthogonal arrangement of micro-lens array onto the image sensor, but the micro-lens array may be distributed according to other arrangement, such as a quincunx arrangement for example, without departing from the scope of the disclosure. The image sensor (IS) comprises a plurality of rows and columns of pixels, and each micro-lens image covers at least partially a predetermined number of rows and a predetermined number of columns of the image sensor. In the example of figure 4, the plenoptic imaging device is designed so that each micro-lens image covers at least partially four pixels of the image sensor, thus allowing the generation of four views of the captured scene, each view corresponding to the scene seen from a particular viewing angle. As it can be seen in figure 4, the color filters of the color wheel are arranged so that each pixel covered by a micro-lens image is associated with one color filter of the color wheel. For example, pixel 41 is associated with a blue color filter, and pixel 42 is associated with a green color filter. In that way, the color filter element according to the proposed technique advantageously replaces the color filter array of prior art plenoptic imaging device. Indeed, the color filter element is arranged in an aperture stop plane of the main lens, where the ratio thickness-to-area of the color filters can be reduced drastically, thus allowing limiting optical crosstalk. For example, the color filters can be deposited by any fabrication mean on a very thin glass plate arranged in the aperture stop plane of the main lens.

The fact that the proposed technique allows removing the color filter array from the surface of the image sensor offers others advantages. For example, it simplifies the image sensor fabrication dramatically as the implementation of a multi-color filters directly on an image sensor is a complex and expensive task. Removing this step makes the manufacturing process cheaper and faster and affects the yield positively. Removing the color filters from the surface of the image sensor also allows improving the signal-to-noise ratio at the image sensor level. Indeed, color filter arrays used in prior art plenoptic imaging device are usually absorptive filters, and having them directly on the image sensor surface increases the heating and thus the signal noise.

As it may be seen in figure 4, a plenoptic imaging device according to the proposed technique has to be fine-tuned, so that the frontiers between the different color filters of the color filter element, once imaged on the image sensor, coincide with some frontiers between image sensor pixels. In a particular embodiment of the present disclosure, in order to prevent misalignment of these frontiers which could lead to color crosstalk, the different color filters of the color filter element are separated by opaque frontiers, the width of which offers a safety margin when adjusting the respective positions of the color filter element and of the image sensor. Figure 3b, already introduced previously, illustrates how such opaque frontiers may be implemented in case of a color filter element taking the form of a color wheel. It appears clearly from figure 3b that such a color wheel's structure provides more flexibility when adjusting the color wheel's position, by permitting slight shift (both linear and rotary) of the position of the color wheel.

According to an embodiment, color filters of the color filter element are dichroic filters. Compared to absorption filters, dichroic filters offer much better rejection ratios at wavelengths they are not supposed to transmit. Due to this possibility to use spectral bands with high rejection ratios, dichroic filters greatly enhance the color gamut compared to absorption color filters.

Of course, the shape of the color filter element and the color filters arrangement within the color filter element are not limited to the color wheel described in relation with figures 2, 3a, 3b, and 4, and a plenoptic imaging device comprising other shapes of color filter element (such as a grid of rectangular or square color filters for example) may be designed without departing from the scope of the present disclosure.

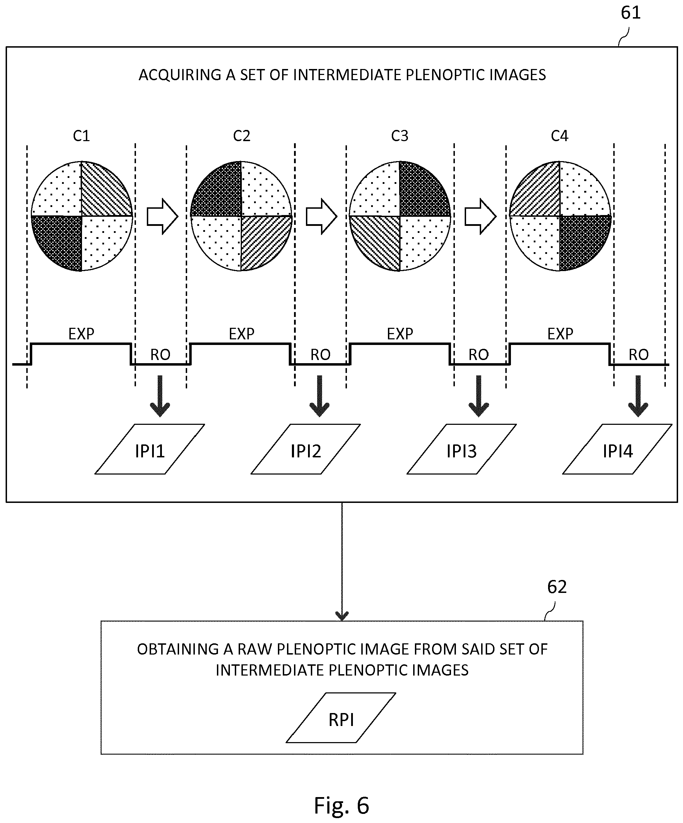

According to others embodiments of the present disclosure, the color filter element can shift between different predetermined configurations. By predetermined configuration, it is understood a given position or orientation of the color filter element within the main lens aperture stop plane, or a given arrangement of the different color filters within the color filter element itself (figure 6, discussed later, shows an example of different configurations C1, C2, C3, C4 of a color filter element taking the form of a color wheel). Modifying the color filter element configuration from a predetermined configuration to other predetermined configurations makes it possible to dynamically change the color filter associated with a given pixel of the image sensor. In that way, the plenoptic imaging device according to the proposed technique may be used for example to generate true-color views of a scene, without the need for demosaicing, as it will be exposed later, in relation with figure 6.

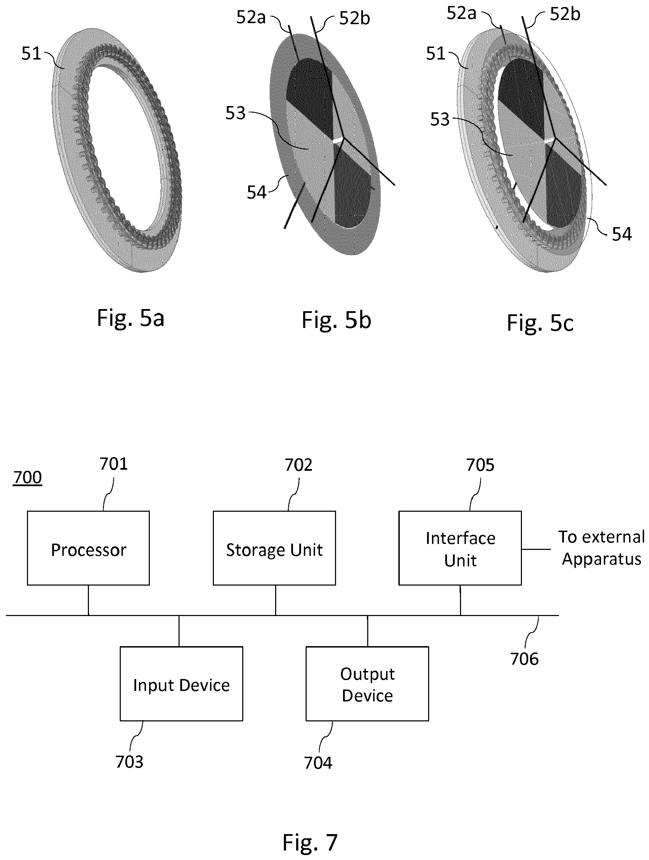

Modifying the color filter element configuration can be implemented in several ways. According to one implementation, the color filter element can move between at least two predetermined positions in the aperture stop plane of the main lens. In one embodiment of this implementation, the color filter element takes the form of a color wheel centred on the optical axis of the plenoptic imaging device (such as the one already described in relation with figure 3a, for example), and the plenoptic imaging device comprises means for rotating said color wheel about said optical axis. By rotating the color wheel of figure 3a by one or more quarter turn, it is possible to associate successively different color filters to a given pixel of the image sensor. For example, in the configuration illustrated in figure 4, pixel 41 is associated with a blue color filter (thus measuring the intensity of the blue component of the light), but after rotating the color wheel by a quarter turn clockwise, the same pixel is associated with a green color filter (thus measuring the intensity of the green component of the light). In the same way, in the configuration illustrated in figure 4, pixel 42 is associated with a green color filter (thus measuring the intensity of the green component of the light), but after rotating the color wheel by a quarter turn clockwise, the same pixel is associated with a red color filter (thus measuring the intensity of the red component of the light). The rotation of the color wheel may be contactless, and produced by a moving magnetic field. **Figures 5a, 5b and 5c** illustrate an Eddy current ring motor that can be used to generate such a rotary motion. Figure 5a shows a ring stator 51 allowing producing a rotating magnetic field from electrical oscillating currents. Figure 5b shows the color wheel 53 mounted within a pair of triple spider hinges 52a, 52b. The wheel comprises a peripheral part 54 coated with ferromagnetic material, that forms the rotor of the Eddy current ring motor. Figure 5c shows the stator 51 of figure 5a and the rotor 54 of figure 5b mounted together. The ring shaped form of the stator 51 let light pass through its center. The spider hinges (52a, 52b) do not pick up too much light since they are very thin compared to the overall aperture size. The color wheel's rotation is produced by the rotating magnetic field, which generates Eddy currents into the ferromagnetic ring material. Of course, an iris blade type diaphragm can also be part of this system. Since the color wheel needs to be arranged in the aperture plane of the main lens, such an iris blade type diaphragm can be placed for example just slightly in front of the wheel, between the glass plate holding the color filters and the front spider hinges.

Other solutions exist to rotate the color wheel by using a ring that let pass the light through the aperture. For example, means for rotating may comprise a piezoelectric ring motor instead of an Eddy current ring motor. Piezoelectric ring motors, known under different brand names like Silent Wave Motor (Nikon) or Ultra Sonic Motor (Canon), are stepper motor that are very easy to drive into a specific angle. The very lightweight of the color glass plate makes them very efficient in speed and precision.

Of course, other moves than rotation may be envisaged, especially when the color filter element takes other forms than a wheel. For example, if the color filter element takes the form of a grid of square or rectangular color filters, it may for example be translated within the main lens aperture stop plane thanks to appropriate means.

According to a complementary or alternative implementation, the color filters of the color filter element are electronically color-switchable filters, like SnapWave™ filters developed by ColorLink Japan Limited Company for example. These electronically switchable filters can switch from one color state into another in as less as fifty microseconds. Compared to moveable color filter element, such an implementation based on electronically color-switchable filters is interesting since it does not required a complex mechanism (such as an Eddy current or a piezoelectric ring motor, as described above) to modify the color filter element configuration. The reliability of the plenoptic imaging device is thus improved.

### 5.2 Method for obtaining a raw plenoptic image

According to another aspect of the present disclosure, it is proposed a method for obtaining a raw plenoptic image, the method being implemented by a plenoptic imaging device according to the general principle of the present disclosure. As described previously, the plenoptic imaging device comprises a micro-lens array placed between a main lens and an image sensor, and a color filter element arranged in an aperture stop plane of the main lens, the color filter element comprising at least two different color filters. The method for obtaining a raw plenoptic image is presented in relation with **figure 6****,** in one embodiment of the proposed technique.

At step 61, the plenoptic imaging device is used to acquire, in different predetermined configurations of the color filter element, a set of intermediate plenoptic images. In the embodiment described in relation with figure 6, the color filter element is for example a color wheel such as the ones illustrated in relation with figure 3a or 3b. The color wheel can take four different predetermined configurations, noted C1, C2, C3, C4 on figure 6.

As illustrated in figure 6, the acquisition of a current intermediate plenoptic image of the set of intermediate plenoptic images comprises:
- exposing (EXP) the image sensor to light coming through the plenoptic imaging device, in a current predetermined configuration of the color filter element;
- reading out (RO) data from the image sensor for acquiring said current intermediate plenoptic image, after said image sensor exposure.

After the image sensor has been exposed in the current predetermined configuration of the color filter element, the configuration of the color filter element is modified from said current predetermined configuration to a following predetermined configuration, in order to prepare the next image sensor exposure. For example, the image sensor of the plenoptic imaging device is first exposed in configuration C1 of the color wheel, thus allowing to acquire a first intermediate plenoptic image IPI1, by reading out data from the image sensor after said exposure. Once the image sensor has been exposed in configuration C1, the configuration of the color wheel is modified from configuration C1 to configuration C2, for the acquisition of a second intermediate plenoptic image IPI2. In that way, by repeating this process, a set of four intermediate plenoptic images IP1, IP2, IP3 and IP4 may be obtained, corresponding to intermediate plenoptic images acquired respectively in configuration C1, C2, C3 and C4 of the color wheel.

According to a particular characteristic, reading out data from the image sensor for acquiring the current intermediate plenoptic image (e.g. IP1) and modifying the configuration of the color filter element from the current predetermined configuration to a following predetermined configuration (e.g. from C1 to C2) are carried out simultaneously. In that way, the time required to acquire the whole set of intermediate plenoptic images (IP1, IP2, IP3, IP4) may be reduced.

Modifying the configuration of the color filter element can be done in different ways. According to an embodiment of the proposed technique, it comprises moving the color filter element in the aperture stop plane of the main lens of the plenoptic imaging device. In the embodiment illustrated in figure 6, modifying the color wheel configuration from C1 to C2, from C2 to C3, or from C3 to C4 can for example be carried out by rotating the color wheel by a quarter turn clockwise thanks to appropriate means for rotating, such as for example an Eddy current or a piezoelectric ring motor embedded in the plenoptic imaging device, as previously described. According to a complementary or alternative embodiment, the color filters of the color filter element are electronically color-switchable filters. In that case, modifying the color wheel configuration from C1 to C2, from C2 to C3, or from C3 to C4 can be carried out without moving the color wheel, but by transmitting appropriate electronics command to the different color filters of the color wheel.

At step 62, a raw plenoptic image RPI is obtained from the set of intermediate plenoptic images previously acquired. More particularly, according to an embodiment, the intermediate plenoptic images are combined to generate the raw plenoptic image. One main advantage of the proposed method for obtaining a raw plenoptic image is that it allows generating a true-color plenoptic image, at least for the pixels of the image sensor that belongs to micro-images of micro-lenses, which are the "useful" pixels since they are the pixels that will be reorganized at the de-multiplexing stage to generate the different views of the scene. Indeed, by modifying the color filter element configuration, it is possible to acquire several intermediate plenoptic images, which together contain the whole color information (for example the intensity for the blue, the red and the green components of the light) for all the useful pixels.

In that way, the step of demosaicing carried out by prior art plenoptic imaging device - which consists in reconstructing a full color image from the incomplete color samples output from an image sensor overlaid with a color filter array - is no more required. The loss of resolution inherent to such a color interpolation is therefore avoided.

Thus, the proposed method for obtaining a raw plenoptic image has many advantages compared to prior art solutions: the structural characteristics of the plenoptic imaging device implementing the method allows reducing optical crosstalk that may occur at the image sensor level, thus boosting the overall light-efficiency, and the proposed method allows improving the spatial resolution of the views obtained with this plenoptic imaging device, which are artefact-free, since demosaicing is no more needed.

While the present disclosure has been described with reference to exemplary embodiments relying mainly on a color filter element that takes the form of a color wheel, it will be understood by those of ordinary skill in the pertinent art that various changes may be made and equivalents may be substituted for the elements thereof without departing from the scope of the disclosure. More particularly, other type of color filter element (in terms of shape of the color filter element, and of color filters arrangement within the color filter element) may be used without departing from the scope of the present disclosure

### 5.3 Apparatus

**Figure 7** is a schematic block diagram illustrating an example of an apparatus for obtaining a raw plenoptic image according to an embodiment of the present disclosure. Such an apparatus is embedded in a plenoptic imaging device.

An apparatus 700 illustrated in figure 7 includes a processor 701, a storage unit 702, an input device 703, an output device 704, and an interface unit 705 which are connected by a bus 706. Of course, constituent elements of the computer apparatus 700 may be connected by a connection other than a bus connection using the bus 706.

The processor 701 controls operations of the apparatus 700. The storage unit 702 stores at least one program to be executed by the processor 701, and various data, including for example parameters used by computations performed by the processor 701, intermediate data of computations performed by the processor 701, and so on. The processor 701 is formed by any known and suitable hardware, or software, or a combination of hardware and software. For example, the processor 701 is formed by dedicated hardware such as a processing circuit, or by a programmable processing unit such as a CPU (Central Processing Unit) that executes a program stored in a memory thereof.

The storage unit 702 is formed by any suitable storage or means capable of storing the program, data, or the like in a computer-readable manner. Examples of the storage unit 702 include non-transitory computer-readable storage media such as semiconductor memory devices, and magnetic, optical, or magneto-optical recording media loaded into a read and write unit. The program causes the processor 701 to perform a method for obtaining a raw plenoptic image according to an embodiment of the present disclosure as described previously. More particularly, the program causes the processor 701 to acquire a set of intermediate plenoptic images, by reiterating the following steps:
- set the configuration of a color filter element of the plenoptic imaging device to a given predetermined configuration;
- expose an image sensor of the plenoptic imaging device to light coming through said plenoptic imaging device in the given predetermined configuration of the color filter element;
- read out data from said image sensor for acquiring an intermediate plenoptic image corresponding to said given predetermined configuration of the color filter element.

The program then causes the processor 701 to obtain a raw plenoptic image from said set of intermediate plenoptic images. The different predetermined configuration of the color filter element may be stored into storage unit 702.

The input device 703 is formed for example by an image sensor.

The output device 704 is formed for example by any image processing device, for example for de-multiplexing plenoptic data read-out from the image sensor.

The interface unit 705 provides an interface between the apparatus 700 and an external apparatus. The interface unit 705 may be communicable with the external apparatus via cable or wireless communication. In some embodiments, the external apparatus may be a display device for example.

Although only one processor 701 is shown on figure 7, it must be understood that such a processor may comprise different modules and units embodying the functions carried out by apparatus 700 according to embodiments of the present disclosure, among which a module for acquiring, in different predetermined configurations of the color filter element, a set of intermediate plenoptic images, and a module for obtaining a raw plenoptic image from said set of intermediate plenoptic images.

These modules and units may also be embodied in several processors 701 communicating and cooperating with each other.

## Claims

1. A plenoptic imaging device (2) comprising a micro-lens array (MLA) placed between a main lens (L) and an image sensor (IS), **wherein** said plenoptic imaging device (2) further comprises a color filter element (CFE) arranged in an aperture stop plane of the main lens (L), said color filter element (CFE) comprising at least two different color filters.

2. The plenoptic imaging device according to claim 1 **wherein** said color filter element can move between at least two predetermined positions in said aperture stop plane.

3. The plenoptic imaging device according to claim 1 **wherein** said color filter element takes the form of a color wheel centred on the optical axis of the plenoptic imaging device, **and wherein** said plenoptic imaging device comprising means for rotating said color wheel about said optical axis.

4. The plenoptic imaging device according to claim 3 **wherein** said means for rotating comprise an Eddy current ring motor or a piezoelectric ring motor.

5. The plenoptic imaging device according to claim 3 or 4 **wherein** said color wheel is divided into four equal parts, each part comprising one of said color filters.

6. The plenoptic imaging device according to any one of claims 1 to 5 **wherein** said color filter element comprises a multiple of four color filters, respectively of color green, blue and red, in a proportion of two green color filters for one red color filter and one blue color filter.

7. The plenoptic imaging device according to any one of claims 1 to 6 **wherein** said at least two different color filters are dichroic filters.

8. The plenoptic imaging device according to claim 1 **wherein** said at least two different color filters are electronically color-switchable filters.

9. A method for obtaining a raw plenoptic image, **wherein** said method is implemented by a plenoptic imaging device comprising a micro-lens array placed between a main lens and an image sensor, and a color filter element arranged in an aperture stop plane of the main lens, said color filter element comprising at least two different color filters, **and wherein** said method comprises:
- acquiring (61), in different predetermined configurations of said color filter element, a set of intermediate plenoptic images;
- obtaining (62) said raw plenoptic image from said set of intermediate plenoptic images.

10. The method according to claim 9, wherein the acquisition of a current intermediate plenoptic image of said set of intermediate plenoptic images comprises:
- exposing (EXP) said image sensor to light coming through said plenoptic imaging device, in a current predetermined configuration of said color filter element;
- reading out (RO) data from said image sensor for acquiring said current intermediate plenoptic image, after said image sensor exposure.

11. The method according to claim 10, **wherein** it comprises modifying the configuration of said color filter element from said current predetermined configuration to a following predetermined configuration, after said image sensor exposure in said current predetermined configuration of the color filter element.

12. The method according to claim 11, **wherein** reading out data from the image sensor for acquiring said current intermediate plenoptic image and modifying the configuration of the color filter element from said current predetermined configuration to said following predetermined configuration are carried out simultaneously.

13. The method according to claim 11 or 12, **wherein** modifying the configuration of the color filter element comprises:
- moving said color filter element in said aperture stop plane, and/or
- electronically switching colors of said at least two color filters of said color filter element.

14. A computer program product downloadable from a communication network and/or recorded on a medium readable by a computer and/or executable by a processor, comprising program code instructions for implementing a method according to any one of claims 1 to 13.

15. A non-transitory computer-readable medium comprising a computer program product recorded thereon and capable of being run by a processor, including program code instructions for implementing a method according to any one of claims 1 to 13.
